# EUROPEAN PATENT APPLICATION

(11) **EP 0 762 035 A1**
(43) Date of publication of application: **12.03.1997**
(21) Application number: 96305922.5
(22) Date of filing: 13.08.1996
(51) Int. Cl.: F16L 37/084

(54) **Tube coupling**

(30) Priority: 15.08.1995 GB 9516697
(71) Applicant: Opella Limited, London WC2B 6XF (GB)
(72) Inventor: Davis, Vaughan, Belmont, Hereford, HR2 7ZW (GB); Taylor, Peter John, Stafford, Staffordshire, ST19 9AE (GB)
(74) Representative: Mosey, Stephen George

(57) **Abstract**

A tube coupling comprising a body (12) having a stepped bore therethrough, the bore receiving a retaining ring (20,21:59), a thrust washer (19,20), and an O-ring seal (17,18) therein, with a quick release collet (15,16) being held at an open end of the bore. A tube (10,11) inserted into the bore is held by gripping teeth of the retaining ring biting into the external surface thereof, release of the engagement being effected by angular movement of the collet (15,16) which is converted into axial inwards movement to force the thrust waster to release the teeth from the tube. The conversion from angular to axial movement of the collet is by means of abutments (50,51,52) on the collet moving along cam sections (36,37,38) on an interior, inwardly facing radial surface (35a) of the body.

## Description

This invention relates to a tube coupling of the type in which a tube inserted into the coupling through one end thereof, in use, is engaged by 'fingers' of a retaining ring within the coupling, the tube then being held against removal from the coupling in a direction opposite to that of its insertion by frictional forces causing the 'fingers' to 'bite' into the tube surface. Release of the tube is effected by an unlocking ring operable to effect disengagement of the 'fingers' and allow release of the tube. In a prior art coupling of this type, the unlocking ring can be pushed longitudinally of the coupling directly to engage the 'fingers', and disengage them from the tube, which can then be removed from the coupling.

An object of the invention is to provide an improved tube coupling.

According to the invention a tube coupling comprises a body having a bore extending into the body at one end thereof, a retaining ring disposed in said bore, an inner peripheral portion of the ring having gripping means to bite into an outer surface of a tube intended to be inserted into said bore, and a release member carried by the body at or adjacent said one end thereof, the release member being movable, in use, between a first position where it allows said gripping means to engage said inserted tube outer surface to prevent removal of the tube from said one end of the body, and a second position where it causes force to be transmitted to the gripping means to release the tube and allow removal of the tube from said one end of the body, the release member being angularly movable between its first and second positions.

Preferably said bore contains force transmitting means at a position between said retaining ring and said one end of the body, and in said second position of the release member a part thereof acts on said force transmitting means to transmit said force directly to the gripping means, to release the tube.

Desirably the angular movement of the release member is converted into axial movement thereof by movement of part of the release member along a cam surface of the body.

Conveniently the cam surface includes a locking stop portion which serves to prevent angular movement of the release member from its first position towards its second position unless an angular force greater than a predetermined value is applied to said release member. In this manner, accidental release of the tube is prevented.

Where a tube of the tube coupling is to be subjected, in use, to an axial force in a direction to pull it out of the coupling body, the retaining ring is advantageously a locking ring of the form described and shown in International Application No PCT/GB92/01363. However a well known conventional locking ring known as a 'Starlok Washer' could be used instead. More preferably the force transmitting means is a configurated thrust washer, which is arranged to transmit force to only the inner peripheral portion, i.e. the gripping means, of the ring.

As used herein, 'tube' includes a tubular part of a component, as well as a single tube.

The invention will now be described, by way of example, with reference to the accompanying drawings, in which:
Figure 1 is a side view of a tube coupling of the invention, with two coupled tubes being shown;
Figure 2 is an end view of the coupling of Figure 1;
Figure 3 is a longitudinal centre section through the tube coupling of Figure 1;
Figures 4 and 5 are a side view and an end view respectively of a body part of the tube coupling;
Figure 6 is a longitudinal centre section through the body part of Figures 4 and 5;
Figure 7 is a cross-sectional view on the line 7-7 of Figure 6;
Figures 8 to 11 are respectively a side view, a view of one end, a longitudinal centre section and a view of the other end of a release collet of the tube coupling of the invention;
Figures 12 to 15 are respectively a side view, a view of one end, a view of the other end and a longitudinal centre section of a further body part of the tube coupling;
Figure 16 is an enlarged development of the internal cam surface of the further body part, with a detail of part of said cam surface being shown;
Figures 17 and 18 show a view of one end and a centre section respectively for a washer of the tube coupling;
Figures 19 and 20 are respectively a plan view and a central section of one form of a suitable retaining ring for use in the tube coupling of the invention,
Figures 21 to 23 are respectively a plan view, a central section and a side view of another form of a suitable retaining ring for use in the tube coupling of the invention,
Figure 24 is a view similar to Figure 3, but with the coupling including the retaining ring of Figures 21 to 23, and a different coupling body, and
Figure 25 is another schematic view similar to Figure 3, but with the coupling including the retaining ring of Figures 21 to 23, a different coupling body and a different release arrangement for the retaining ring.

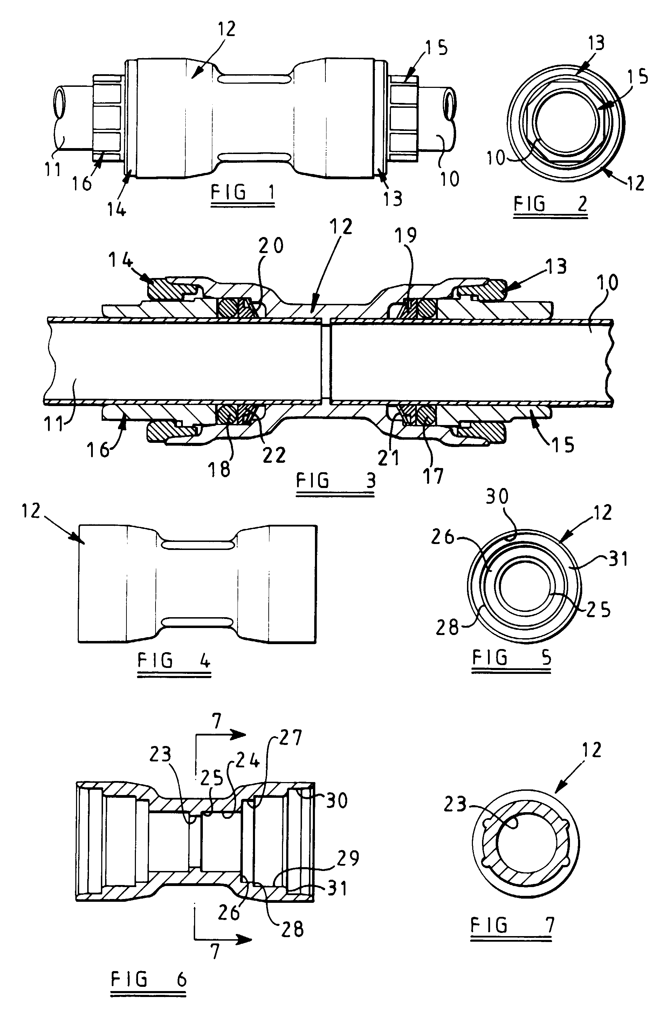

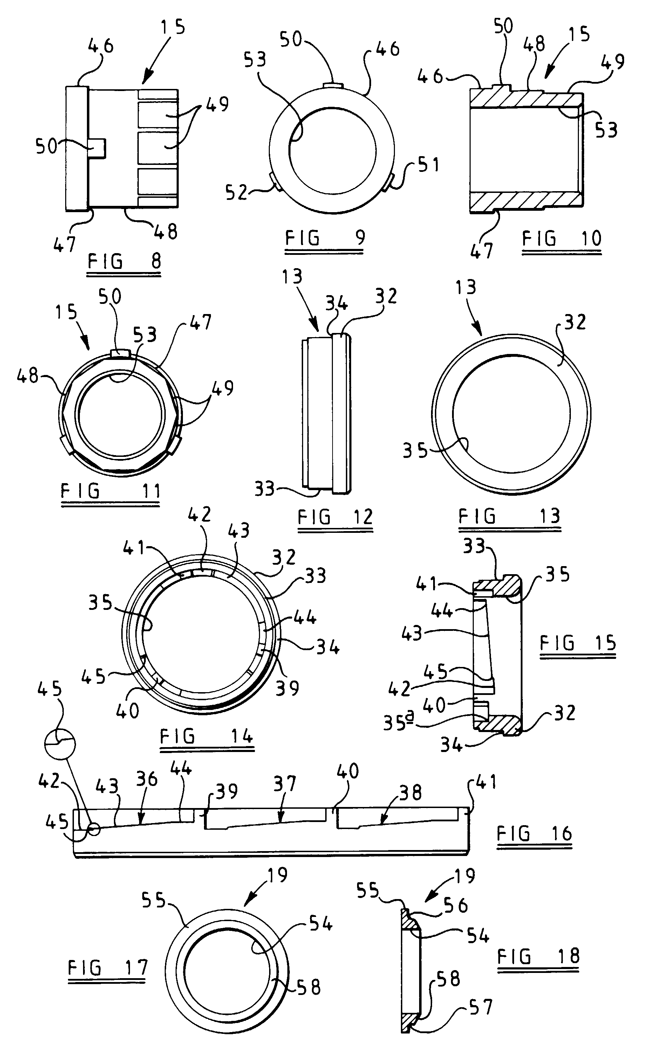

The embodiment of a tube coupling according to the invention shown in Figures 1 to 3 is in the form of a straight coupling where two tubes 10,11 respectively are coupled together in an axially aligned relationship. However it will be appreciated that the invention is equally applicable to i) the coupling of tubes at an angle to one another, typically 90°, ii) the coupling together of more than two tubes, and iii) the coupling of a single tube to a coupling body.

With the embodiment of the invention illustrated, the tube coupling comprises a body made up of a main body portion 12 to the opposite end of which are secured respective secondary body portions 13, 14. As will be described, all the components of the body are generally cylindrical but with various internal and external steps. As shown in Figure 3, respective quick release collets 15, 16 are held in the opposite ends of the body and disposed within the body, axially inwardly of the collets, are respective O-ring seals 17, 18, release washers 19, 20 and retaining or grab rings 21, 22. The main and secondary body portions, as well as the collets, can be of plastics material, or alternatively of metal, such as brass.

As will be appreciated from Figures 1 and 3, the coupling is symmetrical about a central radial plane therethrough, and thus hereinafter only one end of the body with associated components will be described, namely that for the connection and release of the tube 10 to and from the body, since the connection and release of the tube 11 is identical.

The main body portion 12 is shown in detail in Figures 4 to 7. As can be seen from these figures, a stepped bore extends completely therethrough. Starting at the centre of the main body 12, is the narrowest section 23 of the circular bore, this section being relatively short and leading to the next, wider section 24 by virtue of a step defining a radial shoulder 25. The section 25 leads by way of a radial shoulder 26 to a short section 27 of the circular bore, this leading by way of a short step defining a radial shoulder 28 to a somewhat longer section 29 of the bore. The section 29 leads to a final section 30 which is the largest part of the circular bore, this being at the end of the main body. The section 30 is defined by a step which provides a shoulder 31. It is intended that the outer diameter of the pipe 10 to be fitted to the coupling substantially corresponds to the internal diameter of the section 24, with the inserted end of the pipe engaging against the radial shoulder 25 which forms an end location for the inserted pipe, in use.

A secondary body portion 13 is shown in detail in Figures 12 to 16. This is generally in the form of a hollow cylindrical member having, at one end, an outwardly extending radial flange. As shown best in Figure 12, the exterior surface of the body portion is formed with a short radial flange 32 at one end, with an adjacent cylindrical surface 33 extending from the flange by way of a step defining an axially directed, radial shoulder 34, which has a radial extent corresponding substantially to the radial extent of the end of the main body portion 12 in which the final section 30 of the through bore is provided. Thus as shown in Figure 3, the body portion engages at the end of the tube with the flange 32 disposed at the end of the main body portion, with the remainder of the body portion extending from the flange being received within the section 30, the outer cylindrical surface 33 being tightly engaged against the inner cylindrical surface of the section 30 of the bore. As will be described, the secondary body portion is secured in this position to the end of the main body portion once a collet is positioned in the main body portion as shown in Figure 3. This engagement between the secondary body portion and the main body portion can be by any suitable means which produce a joint which is sufficient to resist forces acting between said components upon operation of the tube coupling during both its release and engagement conditions. With the components being of plastics material, the connection could be made, for example, by way of adhesive, or alternatively by ultra-sonic welding. If the components are of metal, the connection can be by way of respective inter-engaging screw threads, with an appropriate seal therebetween.

With regard to the interior surface of the secondary body portion, it can be seen from Figures 14 to 16 that a cylindrical surface 35 extends inwardly along approximately two thirds of the length of the component from the end thereof at which the flange 32 is provided. The internal surface is then formed with an outwards step, the stepped radial surface 35a so formed, facing axially inwards of the body and being configurated as shown in the developed view of Figure 16, to provide three cam surface sections 36, 37, 38 respectively, adjacent sections being separated by respective lands 39, 40, 41 which extend to the opposite end of the secondary body portion. As shown in Figure 16, each cam surface section is in three parts these being identified as a first part 42, a second part 43, and a third part 44. These extend angularly around the internal surface by 20°, 70° and 20° respectively, with each land extending over 10°. The first part 42 of the cam section is in a radial plane, as is the third part 44. However, the part 42 is disposed further axially inwardly than the part 44 from the end of the body portion to which the lands extend. The second part 43, which extends between the parts 42 and 44, is accordingly sloped. At the junction of the first and second parts, there is provided a short sloping step 45, shown in detail in the ringed part of Figure 16. As will be described, this acts, in use, as a safety feature preventing accidental release of the pipe 10, by ensuring that a positive release force is applied to the collet, sufficient to overcome the stop provided by this step 45.

The collet 15, shown in Figures 8 to 11, is a hollow cylindrical member having at its one end a relatively short cylindrical surface portion 46, which defines the largest external diameter part of the component. Inwardly from said one end, the outer surface is stepped down from said surface portion 46 to provide a shoulder 47 in a radial plane. The remainder of the exterior surface of the collet is in the form of a cylindrical surface portion 48, this extending to the other end of the collet. However adjacent said one end, this surface portion 48 is provided with a series of ten equi-angularly spaced flats 49 there around, these flats being provided to permit this end of the collet to be manually gripped for rotational movement, as will be described. Additionally around the surface portion 48 at respective positions abutting the shoulder 47 are provided three equi-angularly spaced square abutments 50, 51, 52. The size of each abutment is such that its axial extent is equal to the axial depth of a land 39, 40 or 41 at its side extending to a cam part 42. The angular extent of each abutment is, moreover, equal to the angular extent of both the part 42 and the part 44 of the cam surface section, namely 20°. Accordingly it will be appreciated that each abutment can be received wholly at either the part 42 or the part 44 of a cam surface section. Whereas at part 42 the abutment is received within the part of the secondary body portion cut away to provide the internal cam surface, this is not the case when the abutment is at the part 44, in that as the abutment moves along the second part 43, it is moved axially out of this cut-away portion, so that when at the part 44, a portion of the abutment lies outside of the secondary body portion. As will be more fully described, the consequence of is that the engagement of the collet with the secondary body portion causes axial movement of the collet inwardly of the main body portion when the collet is moved angularly from a first position, where the abutments are wholly within the secondary body portion, to a second portion where they are partly outside it. Finally with regard to the collet, it can be seen from Figures 8 to 11 that it has a central circular hole 53 therethrough, this hole having an internal diameter equivalent to that through the section 23 so as tightly to receive the pipe 10 in the collet, but still allowing rotational movement of the collet about the pipe, as mentioned above.

As can be seen from Figure 3, the collet is fitted in the body so that, as will be described, the end part of the cylindrical surface portion 46 is received as a close fit in the section 29 of the main body portion 12. Similarly its cylindrical surface portion 48 is a close fit within the inner cylindrical surface 35 of the secondary body portion 13. From the above brief mention of the operation of the collet, it will be appreciated that its engagement with the main body portion, the secondary body portion and the tube is such that it is able to be angularly moved, this angular movement being accommodated by an inward or outward axial sliding relative to said other mentioned components of the coupling.

As shown in Figure 3, the O-ring seal 17 is disposed within the main body portion 12 at the end of the collet 15 at which the cylindrical surface portion 46 is disposed. This seal prevents fluid leaking back from the interior of the pipe to the open end of the coupling at which the pipe is initially inserted. As can be seen from Figure 3, this seal contacts the exterior surface of the pipe and also the interior surface of the section 29.

At the side of this seal remote from the collet, there is disposed the release washer 19, which, for example, is of acetal material, or of a hard rubber nitrile. A circular hole 54 through the washer is of a size such that the tube 10 is a close sliding fit through the washer. The exterior surface of the washer is configurated to provide, at one end thereof, a flange part 55, the cylindrical outer periphery of which engages the internal surface of the section 29 of the main body portion. The flat, annular end surface of the washer, at the end at which the flange part 55 is formed, is engaged by the O-ring seal. As shown best in Figure 18, the exterior surface of the washer is formed with a step which thus defines a shoulder 56 at one side of the flange, this leading to a reduced diameter cylindrical part 57 which, in this embodiment, is chamfered to provide a frusto-conical surface 58 extending to the other end of the washer. Instead, however, the end of the part 57 could be square.

Generally, the grab ring can be of any suitable form, such a ring merely requiring at its inner periphery gripping means to bite into the outer surface of the tube 10. In particular, a so-called 'Starlok Washer' could be used, this having a plurality of fingers or teeth around its inner periphery which are deformed out of the plane of the ring when a tube is inserted through the ring, the fingers or teeth then being disposed at an angle to said plane of the ring and engaging the outer surface of the pipe. Attempted axial withdrawal of the pipe, in the opposite direction to that of insertion, is resisted by the fingers which tend to be pulled back towards the plane of the ring so as tightly to bite into the tube outer surface.

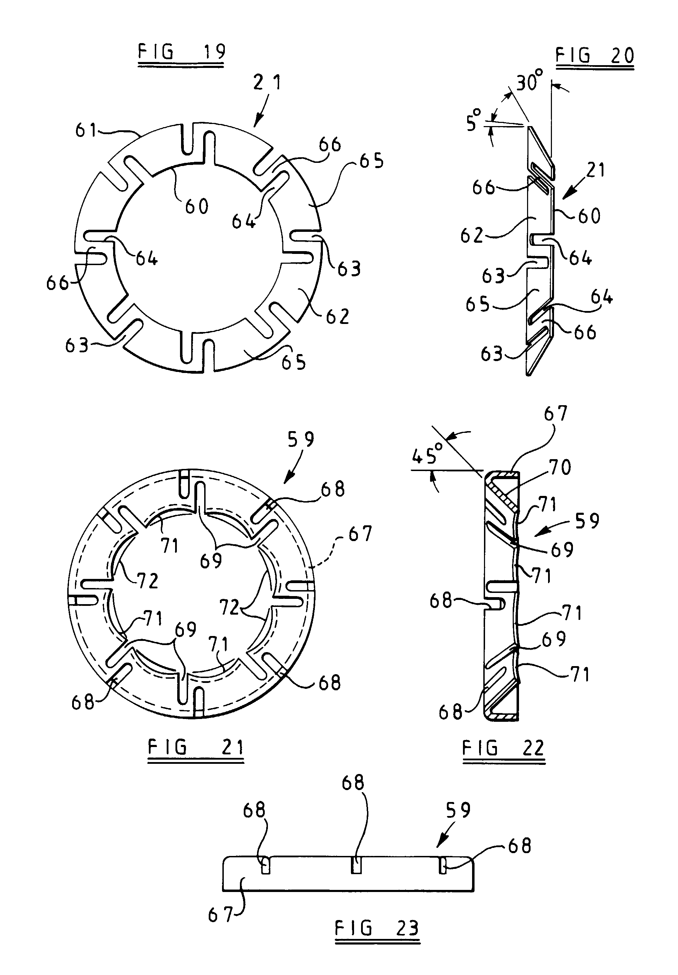

Another form of suitable retaining or grab ring is the ring 21 shown in Figures 19 and 20. This is a locking ring of the form described and shown in International Application No PCT/GB92/01363. This metal ring, e.g. steel, defines a back face (not shown), a radially inner surface 60, a radially outer surface 61, and a front face 62. The ring is provided with eight equiangularly spaced pairs of straight elongate slots 63 and 64. Each pair comprises a slot 63 extending radially inwardly from the surface 61 to a depth just less than the radial thickness of the ring, and a substantially parallel slot 64 of the same depth which extends radially outwardly from the inner surface 60, the slots being of the same width. Although in Figure 19 the slots are shown with rounded inner ends, the detail is not critical, and in Figure 20 these ends are shown square. These pairs of slots define strut portions 65 and spring portions 66 of the ring, so that the ring is formed as an annular array of struts resiliently interconnected by a series of springs, with the struts therefore being capable of a significant freedom of movement with respect to one another.

As indicated in Figure 20, the radially inner and outer surfaces of each strut are parallel and inclined at an angle of approximately 5° to the centre axis of the ring. The front and back faces of each strut are also parallel and are inclined at an angle of approximately 30° to a radius drawn to the centre of the ring. Thus the radially outermost circumference of the ring is defined by the outer radius of the front face, and the radially innermost circumference of the ring is defined by the inner radius of the back face.

It has, in fact, been found that, in use, whilst a 'Starlok washer' and a ring of the type shown in Figures 19 and 20 are each suitable for a tube coupling where the tube is subjected to a soley axial force attempting to pull the tube out of the coupling, such rings are not so suitable where there is a rotational element to the separation force. This is because, in use, the outer periphery of such a ring engages, substantially radially, with the inner surface of the bore in the body, with the result that a rotational force on the tube can cause the tube to rotate relative to the ring, so that together with some axial force, the tube can be 'screwed' out of the ring. This is thought to be a particular problem with tubes of plastics materials.

To overcome this problem, an alternative form of retaining or grab ring 59, shown in Figures 21 to 23, can be used in the coupling.

The one-piece metallic ring 59 is of similar form to the ring 21, but is formed at its outer periphery with a cylindrical collar 67 which extends axially rearwardly to terminate at the radial plane substantially containing the radially inner periphery of the ring. As shown best in Figure 23 the slots 68, equivalent to the slots 63 of ring 21, now extend into the collar 67. The slots which are equivalent to slots 64 of ring 21 are indicated by the numeral 69, with the back or rear face of the ring 59 being shown at 70.

Additionally the ring 59 is formed, as best shown in Figure 21, with its radially inner 'teeth' surfaces 71 each having greater curvature than that of a circle struck about the axis of the ring to define the tube reception opening, such curvature being indicated at 72. The surfaces 71 assist the biting of the 'teeth' onto the tube and better resist any separation forces.

Our U. K. Patent Application No (Our Ref: M035949PGB) relates to ring 59 and a tube coupling including same.

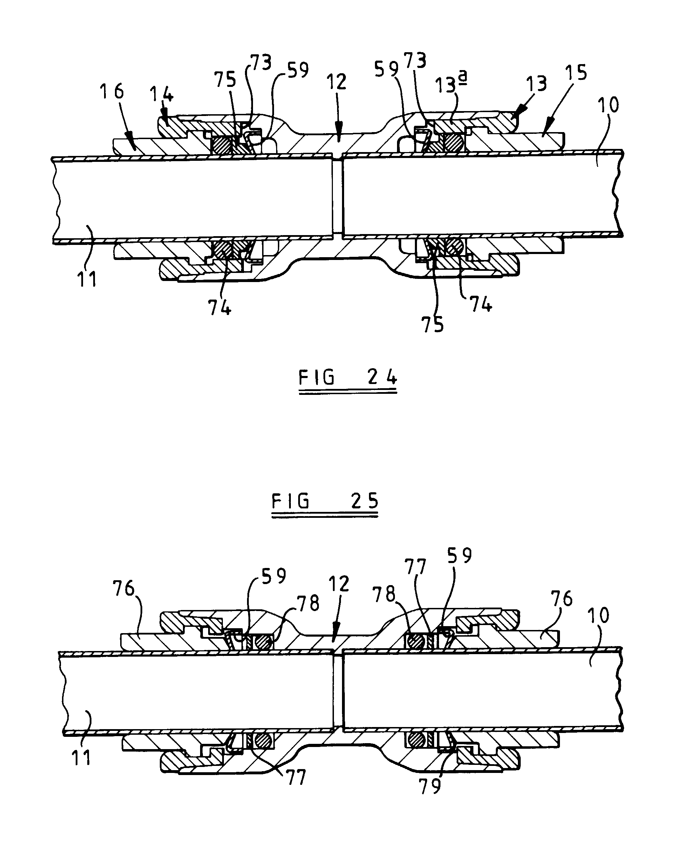

Figure 24 schematically shows the use of ring 59 in a coupling similar to that shown in Figure 3, but which is different in that an inner end of the secondary body portion 13 is extended, at 13a, axially and radially inwardly of main body portion 12, to lie in an extension of section 30, which has absorbed part of the length of section 29 of main body portion 12. The extension 13a provides an annular abutment surface 73 arranged in a radial plane and facing shoulder 31. An O-ring 74 at the inner end of the collet engages both the extension 13a and the inserted tube, and abuts a release washer 75, which is also disposed between the extension 13a and the inserted tube. The teeth of the ring 59 grip the inserted tube, whilst the outer, free peripheral annular edge of the collar 67 abuts annular shoulder 28. Accordingly, the collar prevents the ring 59 engaging into the radially inner surface of the main body portion, thereby ensuring that it rotates with the tube if this is subjected to a rotational force. Thus a 'screwing' out of the tube from the ring is prevented.

Moreover, the surface 73 is arranged so that if an attempt to pull the tube out of the main body portion is made, by application of either a wholly axial force or of one including a rotational component, any axial movement of the tube results in the ring moving with the tube until the part of the ring defined approximately at the junction of the collar and the remainder of the ring engages against surface 73. Importantly, this engagement occurs before the teeth of the ring might be deflected sufficiently by the washer 75 to release the grip of the ring on the tube. Accordingly, the application of such force will not effect release of the tube. If necessary, the surface 73 could be arranged to be abutted by the ring before the ring even engages the washer 75 upon attempted tube removal, instead of as shown in the illustrated embodiment.

Figure 25 schematically shows another coupling using the ring 59. In this arrangement the inner end of the collet 76 is configurated to take the place of the release washer 19, 20 or 75, and acts directly on the teeth of the ring, under normal operation, to release the tube. The ring 59 is thus disposed immediately inwardly of the configurated inner end of the collet, followed by a plain washer 77 to protect an O-ring 78, disposed behind it, from damage by the teeth of ring 59, in use. The inner part of the secondary body portion is again extended axially and radially inwardly to define an extension which provides an annular abutment surface 79 in a radial plane. The radially outermost part of surface 79 abuts shoulder 31. As with the Figure 24 arrangement, any attempt to pull the tube out of the coupling results in the ring 59 engaging surface 79 before any release of the teeth from the tube, by engagement of the teeth with the collet end, can occur. Accordingly, again, the tube cannot be pulled out without collet rotation. In this embodiment, the washer 77 and O-ring 78 are positioned in an extended section 27. Again, section 30 has, in effect, been lengthened to absorb part of the length of section 29, in order to accommodate the extension of the secondary body portion 13.

Whatever the form of ring, this is inserted into the section 29 of the main body portion 12 with its outer periphery (or collar) engaging against the shoulder 28, so that its inner peripheral gripping part is clear to move into the section 27. Except with the Figure 25 embodiment, the side of the release washer remote from the O-ring is intended to engage this gripping part of the ring, and its end face is configurated to effect movement of the teeth or fingers of this gripping part in the same direction as that in which they move when the pipe 10 is initially inserted and engaged with the ring. Accordingly it will be appreciated that for a washer, its front surface is configurated at least partly to match the configuration of the teeth of the ring, so that in the engaged position of the tube, the front surface of the washer is in operative engagement with the gripping means of the grab ring.

In use, the tube 10, which has an outer diameter slightly greater than the internal diameter of the ring, is inserted through the collet, O-ring and release washer so that it reaches the grab ring. The flexible nature of this ring allows the tube to be pushed therethrough forming a tight fit with the edges of the struts bearing against the outer surface of the tube. If an axial force is now applied to the tube to withdraw it, frictional force between the tube and the edges of the struts, and, with 'Starlok' type rings, the frictional force between the interior surface of the section 29 and the outer edges of the ring, will cause these edges to bite into the main body part and tube respectively. Once this biting has occurred, the struts form effective hinges about which the struts tend to pivot if further axial separation load is applied to the coupling. This tends to compress the struts with the resultant force being applied between the tube and the main body portion, resulting in the retention of the tube within the body.

The insertion and retention of a pipe would be substantially the same if the form of retaining ring shown in Figures 21 to 23 is used, namely the teeth or fingers of the gripping part would bite into the outer surface of the tube to resist withdrawal in a direction opposite to that of its insertion, with the outer collar surface being spaced, for example, slightly from, rather than biting into, the interior surface of section 29.

With the Figure 25 embodiment, the tube retention by the teeth of the ring 59 again occurs automatically upon pipe insersion, with the washer and O-ring engaging the tube downstream of the ring engagement.

During insertion of the tube 10, the collet is in a first position shown in Figure 3, where the relative angular position between the collet 15 and the secondary body portion 13 is such that each of the abutments 50, 51 and 52 is at the first part 42 of each of the three cam surface sections along which the abutments move respectively, as previously described, upon angular movement of the collet. Accordingly with these abutments received within the axial extent of the secondary body portion 13, the collet is in its extreme right hand position, as viewed in Figure 3. In this state there is no substantial pressure exerted by the collet on the grab ring 21 via the O-ring 17 and washer 19. Accordingly an inserted tube 10 is engaged by the gripping part of the ring 21.

To release the tube, the collet is gripped manually, normally at the part containing the flats 49, and turned through, for example 90°, in an anticlockwise direction as viewed from the right hand end of Figure 3. This movement causes each abutment to move along its associated cam surface section, this movement causing the abutment, and thus the collet to move axially further into the main body portion 12. This results in the end of the collet moving along section 29 so that it exerts a thrust force on the O-ring seal 17, which force is transmitted via the seal to the washer 19. This washer acts as a force transmitting member to transmit such force to the ring 21. However the configurated outer and front surfaces of the ring are such that the force is transmitted substantially solely to the inner peripheral gripping part of the ring 21 so that the teeth or fingers which provide the grip on the outer surface of the tube 10 are moved further outwardly from the normal plane of the ring, thereby lifting these teeth or fingers off the surface of the tube so that the tube is now free to be released from the coupling in the opposite direction to that of its insertion.

As previously mentioned, the step 45 prevents some resistance to each abutment moving along its respective cam surface section upon angular movement of the collet from its first position, where each abutment is at the first part 42, to the second position of the collet, where each abutment is at the third part 44 of the cam surface section. Accordingly in order to prevent accidental release of an engaged tube, these three steps 45 ensure that an annular force greater than a predetermined value must be applied to the collet to begin its inward movement leading to release of the tube. A similar stop arrangement could be provided additionally or instead of this stop described somewhere else along the cam track, and a stop could also or alternatively be provided between the second and third parts of each cam section. Normally means would be provided on the body and collet to indicate the first and/or second positions of the collet and the required direction of movement to allow tube release.

The transference of force from the collet to the retaining ring is, as described, preferably by means of at least one intermediate thrust transfer ring member. This is a preferable feature of the invention in that by suitably configurating the front surface of the thrust transferring member in contact with the grab ring it is possible to ensure an effective and reliable transference of the force, generated by the resultant forward axial movement of the collet, to the gripping part of the grab ring only. This ensures a reliable and effective release of the teeth or fingers from the retained tube. However, as described with the Figure 25 embodiment, it is possible for the force produced by collet rotaion and resultant axial movement to be transmitted directly to the teeth of the ring.

The form and number of abutments and associated cam surface sections can be varied as required, and the cam sections could alternatively be provided on an exterior part of the body, with an associated part of the collet being formed around the outside of the body portion for appropriate engagement with said cam surfaces, with angular movement of the collet again producing relative axial movement to exert force on the gripping part of the grab ring.

The provision of the O-ring seal immediately behind the collet, in the direction of tube insertion, and thus 'upstream' of the grab ring, is advantageous in maintaining a good seal. If the grab ring were ahead of the O-ring seal, the fingers of the grab ring might produce scoring of the tube surface as the tube is inserted, with the scored part subsequently being within the O-ring upon full insertion of the tube, thereby possibly permitting leakage past the seal. Both in this respect, and also in respect of preventing 'screwing' out of the tube, the coupling of Figure 24 is the most preferred.

The 'scalloping' of the teeth of ring 59, i.e. the provision of the curved surfaces 71, could also be applied to the teeth of the ring 21 or of the 'Starlok' gripping ring, or of any other grab ring used in the coupling.

## Claims

1. A tube coupling comprising a body having a bore extending into the body at one end thereof, a retaining ring disposed in said bore, an inner peripheral portion of the ring having gripping means to bite into an outer surface of a tube intended to be inserted into said bore, and a release member carried by the body at or adjacent said one end thereof, the release member being movable, in use, between a first position where it allows said gripping means to engage said inserted tube outer surface to prevent removal of the tube from said one end of the body, and a second position where it causes force to be transmitted to the gripping means to release the tube and allow removal of the tube from said one end of the body, the release member being angularly movable between its first and second positions.

2. A tube coupling as claimed in Claim 1, wherein the angular movement of the release member is converted into axial movement thereof by movement of part of the release member along a cam surface of the body.

3. A tube coupling as claimed in Claim 2, wherein the cam surface is a sloping surface between respective cam surface end sections which lie in spaced respective radial planes of the body.

4. A tube coupling as claimed in Claim 3, wherein a locking stop is provided between the cam surface and the one of the cam surface end sections which, in an axial direction, is nearer said one end of the body, so that, in use, angular movement of the release member from its first position to its second position is prevented by the locking stop, unless an angular force greater than a predetermined value is applied to said release member.

5. A tube coupling as claimed in Claim 3 or Claim 4, wherein in said first and second positions of the release member said part thereof is engagement with said cam surface end sections respectively.

6. A tube coupling as claimed in any one of Claims 3 to 5, wherein equi-angularly spaced around a surface of the body are three cam surfaces with respective associated cam surface end sections.

7. A tube coupling as claimed in Claim 6, wherein each cam section, comprising a cam surface and its associated cam surface end sections, is separated from another cam section by a land which serves, in use, to limit angular movement of said release member.

8. A tube coupling as claimed in Claim 6 or Claim 7, wherein said surface of the body is an annular interior surface thereof, directed axially inwardly of the body.

9. A tube coupling as claimed in any one of Claims 6 to 8, wherein the release member is a hollow cylindrical member through which said tube passes, in use, the release member having on its external surface three equi-angularly spaced abutments which move along the three cam surfaces respectively from one associated cam surface end section to the other, when the release member moves between its first and second positions.

10. A tube coupling as claimed in any one of the preceding claims, wherein said bore contains force transmitting means at a position between said retaining ring and said one end of the body, and in said second position of the release member force is transmitted therefrom to the force transmitting means which transmit force directly to the gripping means, to release the tube.

11. A tube coupling as claimed in Claim 10, wherein the force transmitting means is disposed between the retaining ring and an inner end of the release member.

12. A tube coupling as claimed in Claim 11, wherein in said second position of the release member, said inner end thereof acts on a seal between the inserted tube and a surface of the bore, the seal transmitting force from said release member to said force transmitting means.

13. A tube coupling as claimed in any one of Claims 10 to 12, wherein the force transmitting means is a thrust ring having its surface, which engages the inner peripheral portion of the retaining ring to effect its release from the tube in the second position of the release member, shaped at least partly to match said inner peripheral portion.

14. A tube coupling as claimed in Claim 13, wherein said surface of the thrust ring is frusto-conical.

15. A tube coupling as claimed in any one of the preceding claims, wherein the bore in said body is stepped to provide an annular surface facing axially out of the body, an annular outer peripheral part of the retaining ring engaging against said annular surface.

16. A tube coupling as claimed in Claim 15, wherein the outer peripheral part of the retaining ring is a cylindrical collar extending axially in the body and having its annular free end engaged against said annular surface of the body.

17. A tube coupling as claimed in any one of the preceding claims, wherein the gripping means are a series of teeth at the inner periphery of the retaining ring, each of the teeth having its gripping surface formed with a concave curvature, the radius of curvature of each tooth gripping surface being smaller than the radius of curvature of the tube to be received through the retaining ring, in use.

18. A tube coupling as claimed in any one of the preceding claims, wherein sealing means for engaging the outer surface of the inserted tube, in use, is disposed in said bore at a position between said one end of the bore and said retaining ring.

19. A tube coupling as claimed in any one of claims 1 to 9, wherein the retaining ring is disposed in said bore at a position immediately next to an inner end of the release member, so that in said second position of the release member force is transmitted therefrom directly to the gripping means, to allow tube release.

20. A tube coupling as claimed in claim 19, wherein the retaining ring is separated from sealing means in said bore by a washer.

21. A tube coupling as claimed in any one of claims 1 to 9, wherein an outer peripheral portion of the retaining ring is in the form of a cylindrical collar extending axially in the body, the body having an abutment portion arranged such that with the release member in its first position, any attempted axial movement of the tube, in use, in the release direction causes the ring to engage said abutment portion, thereby preventing any further such axial movement and release of the gripping means from the tube.
